(19) Europäisches Patentamt
European Patent Office
Office européen des brevets

(11) **EP 3 448 695 B1**

(12) **FASCICULE DE BREVET EUROPEEN**

(45) Date de publication et mention de la délivrance du brevet:
**03.06.2020 Bulletin 2020/23**

(21) Numéro de dépôt: **17710597.0**

(22) Date de dépôt: **17.02.2017**

(51) Int Cl.:
**B60C 9/00** *(2006.01)*      **B60C 9/08** *(2006.01)*
**B60C 9/04** *(2006.01)*

(86) Numéro de dépôt international:
**PCT/FR2017/050366**

(87) Numéro de publication internationale:
**WO 2017/187032 (02.11.2017 Gazette 2017/44)**

(54) **PNEU AVION AYANT UNE ARMATURE DE CARCASSE À ENDURANCE AMÉLIORÉE**

FLUGZEUGREIFEN MIT KARKASSENVERSTÄRKUNG MIT VERBESSERTER DAUERHAFTIGKEIT

AEROPLANE TYRE HAVING A CASING REINFORCEMENT WITH IMPROVED ENDURANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.04.2016 FR 1653620**

(43) Date de publication de la demande:
**06.03.2019 Bulletin 2019/10**

(73) Titulaire: **Compagnie Générale des Etablissements Michelin**
**63000 Clermont-Ferrand (FR)**

(72) Inventeurs:
• **FILIOL, Eve-Anne**
**63040 CLERMONT-FERRAND CEDEX 9 (FR)**
• **MEJEAN, Fabien**
**63040 CLERMONT-FERRAND CEDEX 9 (FR)**

(74) Mandataire: **Desbordes, Guillaume**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
EP-A2- 0 396 494      EP-A2- 1 800 901
WO-A1-2015/039987

**Description**

1. DOMAINE DE L'INVENTION

Le domaine de la présente invention est celui des pneus pour avion à armature de carcasse radiale, destinés de manière connue à être gonflés à des pressions relativement fortes et à porter de très lourdes charges à vitesse élevée.

Elle est plus particulièrement relative aux éléments de renforcement ou « renforts » textiles utilisés dans les armatures de carcasse de tels pneus.

2. ETAT DE LA TECHNIQUE

Le textile est utilisé comme renfort depuis les origines du pneu.

Les renforts textiles, fabriqués à partir de fibres textiles continues telles que des fibres en nylon, jouent on le sait un rôle important dans les pneus, en particulier dans les pneus pour avion. Pour répondre aux exigences de ces pneus, ils doivent présenter une haute résistance mécanique, une bonne endurance et enfin une excellente adhésion aux matrices de caoutchouc qu'ils sont susceptibles de renforcer.

Ceci étant rappelé, les armatures de carcasse radiale des pneus pour avion comportent généralement plusieurs nappes textiles, qui sont ancrées dans chaque bourrelet à au moins une tringle ou élément de renforcement annulaire. Les renforts textiles de ces armatures et nappes sont enroulés autour de la tringle en formant des retournements dont les extrémités respectives sont radialement espacées par rapport à l'axe de rotation du pneu. Les conditions sévères sous lesquelles sont utilisés les pneus pour avion sont telles qu'une très haute endurance de ces armatures de carcasse est nécessaire.

Comme décrit notamment dans le document brevet EP 0 756 950, une amélioration notable de l'endurance a été obtenue dans le passé par la séparation des nappes textiles de l'armature de carcasse en deux groupes : le premier groupe comprend les nappes de l'armature de carcasse axialement intérieures dans la zone des flancs et bourrelets, lesdites nappes étant alors enroulées autour d'une tringle d'ancrage dans chaque bourrelet en allant de l'intérieur vers l'extérieur du pneu ; le deuxième groupe est constitué de nappes axialement extérieures dans la zone ci-dessus, nappes généralement partiellement enroulées autour de la tringle en allant de l'extérieur vers l'intérieur du pneu.

Chaque nappe d'armature de carcasse est quant à elle renforcée par des renforts textiles unidirectionnels sous forme de « câblés » ou « retors » (les deux termes étant synonymes), le plus souvent en polyamide aliphatique ou nylon, chaque câblé étant constitué de plusieurs brins retordus ensemble en hélice. Pour pouvoir renforcer efficacement ces nappes, les propriétés mécaniques en extension (en particulier force à la rupture et ténacité) et la résistance à la fatigue (endurance en extension, flexion, compression) de ces câblés est primordiale ; de manière générale, pour un matériau donné, elles sont d'autant plus élevées que les densités linéiques (titres) et les torsions des câblés sont importantes.

Pour illustrer l'état de la technique sur les armatures de carcasse radiale de pneus pour avion et leurs renforts textiles, on citera également les brevets ou demandes de brevet EP 174 147, 295 348, 364 291, EP 1 808 313, FR 2 624 063FR 2 628 035, FR 2 632 252, US 4 887 655, US 8 752 602. On citera également EP1800901 qui décrit un pneu pour avion comprenant des renforts textiles hybrides.

Aujourd'hui, les manufacturiers de pneus pour avions sont toujours à la recherche de solutions permettant d'améliorer encore l'endurance des armatures de carcasse, en vue d'augmenter la durée de vie des pneus ou, à durée de vie identique, de diminuer le poids de ces armatures et donc des pneus.

Or, au cours de leurs recherches, les Demanderesses ont précisément trouvé qu'une construction spécifique de câblé textile en nylon permettait d'améliorer la résistance à la fatigue de ces renforts dans ces armatures et donc de répondre à l'objectif ci-dessus.

3. BREVE DESCRIPTION DE L'INVENTION

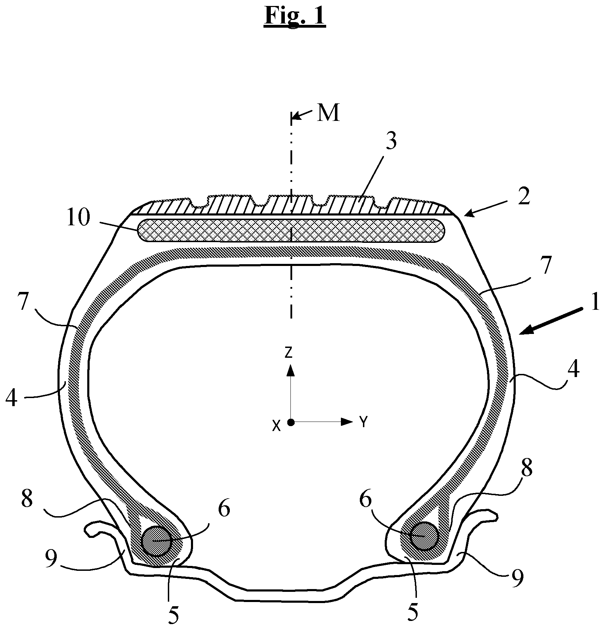

Ainsi, selon un premier objet, la présente invention concerne (selon les références données aux figures 1 à 3 annexées) un pneu radial pour avion (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) à au moins une tringle (6) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3), cette armature (7) de carcasse dite radiale comportant au moins une nappe dite nappe de carcasse sous la forme d'une matrice de caoutchouc renforcée par des éléments de renforcement orientés radialement, dits renforts textiles radiaux, ces derniers étant en tout ou partie constitués par des retors textiles (30) en nylon comportant N brins multifilamentaires (20a, 20b, 20c) retordus ensemble en hélice, dans lequel :

- N est supérieur à 2 ;
- le titre noté Ti de chaque brin est supérieur à 180 tex ;
- la ténacité notée $Te_1$ de chaque brin est supérieure 75 cN/tex ;
- l'allongement à la rupture noté $Ar_1$ de chaque brin est supérieur à 14 % ;
- la ténacité notée $Te_2$ de chaque retors est supérieure à 60 cN/tex ;
- l'allongement à la rupture noté $Ar_2$ de chaque retors est supérieur à 18 % ;
- l'angle d'hélice noté $\alpha$ de chaque retors est supérieur à 20°.

L'invention concerne également l'utilisation, pour le renforcement d'une armature de carcasse d'un pneu radial pour avion, d'un retors textile en nylon tel que défini ci-dessus.

L'invention ainsi que ses avantages seront aisément compris à la lumière de la description détaillée et des exemples de réalisation qui suivent, ainsi que des figures 1 à 4 relatives à ces exemples qui schématisent (sauf indication contraire, sans respect d'une échelle spécifique) :

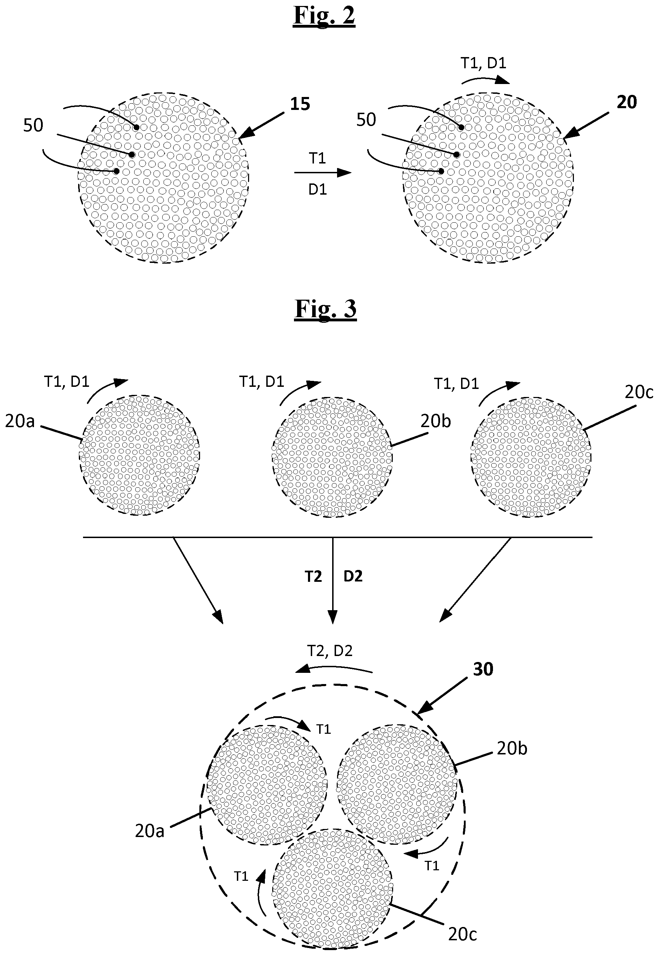

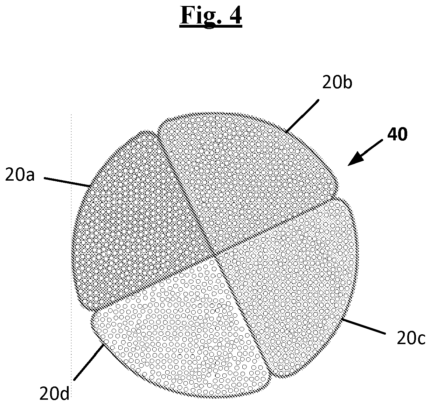

- en coupe radiale (c'est-à-dire selon un plan contenant l'axe de rotation du pneu), un exemple de pneu (1) pour avion selon l'invention, incorporant dans son armature de carcasse radiale (7) un retors textile en nylon conformément à l'invention (Fig. 1) ;
- en coupe transversale, une fibre textile multifilamentaire conventionnelle (ou filé), tout d'abord à l'état initial (15) c'est-à-dire dépourvue de torsion, puis après une première opération de torsion T1 dans la direction D1, sous la forme d'un filé prétordu sur lui-même ou « brin » (20) (Fig. 2) ;
- en coupe transversale, l'assemblage de 3 brins (20a, 20b, 20c) tels que ci-dessus (tous prétordus préalablement selon la torsion T1 dans la direction D1) qui sont retordus ensemble par une deuxième opération de torsion T2 dans la direction D2 opposée à la direction D1, pour formation d'un câblé ou retors textile final (30) pouvant convenir à l'invention (Fig. 3) ;
- en coupe transversale, une autre représentation d'un câblé textile final (40), moins schématique que la précédente, illustrant le fait que la section finale d'un câblé textile (ici, par exemple constitué de 4 brins), une fois formé et sous une tension minimale, s'approche plus dans les faits d'une section à contour circulaire, en raison de la forte plasticité latérale apportée par la nature multifilamentaire du matériau de départ (Fig. 4).

## 4. DEFINITIONS

Dans la présente demande, on entend par :

- "caoutchouc" ou "élastomère" (les deux termes étant considérés comme synonymes) : tout type d'élastomère, qu'il soit du type diénique ou du type non diénique par exemple thermoplastique ;
- "composition de caoutchouc" ou "composition caoutchouteuse" : une composition qui comporte au moins un caoutchouc et une charge ;
- "couche" : une feuille, bande ou tout autre élément d'épaisseur relativement faible par rapport à ses autres dimensions, de préférence dont le rapport de l'épaisseur sur la plus grande des autres dimensions est inférieur à 0,5, plus préférentiellement inférieur à 0,1 ;
- "direction axiale" : une direction sensiblement parallèle à l'axe de rotation du pneu ;
- "direction circonférentielle" : une direction qui est sensiblement perpendiculaire à la fois à la direction axiale et à un rayon du pneu (en d'autres termes, tangente à un cercle dont le centre est sur l'axe de rotation du pneu) ;
- "direction radiale" : une direction selon un rayon du pneu, c'est-à-dire une direction quelconque passant par l'axe de rotation du pneu et sensiblement perpendiculairement à cette direction, c'est-à-dire faisant avec une perpendiculaire à cette direction un angle ne s'écartant pas de plus de 5 degrés (donc nul ou au plus égal à 5 degrés) ;
- "orienté selon un axe ou une direction" en parlant d'un élément quelconque tel qu'un renfort, un élément qui est orienté sensiblement parallèlement à cet axe ou cette direction, c'est-à-dire faisant avec cet axe ou cette direction un angle ne s'écartant pas de plus de 5 degrés ;
- "orienté perpendiculairement à un axe ou une direction" : en parlant d'un élément quelconque tel qu'un renfort, un élément qui est orienté sensiblement perpendiculairement à cet axe ou cette direction, c'est-à-dire faisant avec une perpendiculaire à cet axe ou cette direction un angle ne s'écartant pas de plus de 5 degrés ;
- "plan circonférentiel médian" (noté M) : le plan perpendiculaire à l'axe Y de rotation du pneu qui est situé à mi-distance des deux bourrelets et passe par le milieu de l'armature de sommet ou ceinture ;
- "renforts unidirectionnels" : des renforts essentiellement parallèles entre eux, c'est-à-dire orientés selon un même axe.

D'autre part, sauf indication expresse différente, tous les pourcentages (%) indiqués sont des % en masse.

L'expression « x et/ou y » signifie « x » ou « y » ou les deux (c'est-à-dire « x et y »). Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »).

## 5. DESCRIPTION DÉTAILLÉE ET EXEMPLES DE REALISATION DE L'INVENTION

A titre d'exemple, la figure 1 représente de manière très schématique (c'est-à-dire sans respect d'une échelle spécifique) une coupe radiale d'un pneu (1) pour avion dont l'armature de carcasse radiale (7) est renforcée par des retors textiles en nylon conformément à l'invention.

Ce pneu radial pour avion (1), définissant trois directions principales, circonférentielle (X), axiale (Y) et radiale (Z), comporte un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) à au moins une tringle (6) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3). L'armature de carcasse (7) dite radiale comporte au moins une nappe dite « nappe de carcasse » sous la forme d'une matrice ou composition de caoutchouc renforcée par des éléments de renforcement orientés sensiblement radialement, dits renforts textiles radiaux, dont au moins une partie est constituée par des retors textiles en nylon spécifiques. De préférence, ces derniers constituent la totalité des renforts textiles radiaux utilisés dans ladite nappe de carcasse (7).

Conformément à l'invention, ces retors textiles en nylon, comportant un nombre N de brins multifilamentaires retordus ensemble en hélice, combinent les caractéristiques qui suivent :

- N est supérieur à 2 ;
- le titre noté $Ti$ de chaque brin est supérieur à 180 tex ;
- la ténacité notée $Te_1$ de chaque brin est supérieure à 75 cN/tex ;
- l'allongement à la rupture noté $Ar_1$ de chaque brin est supérieur à 14 % ;
- la ténacité notée $Te_2$ de chaque retors est supérieure à 60 cN/tex ;
- l'allongement à la rupture noté $Ar_2$ de chaque retors est supérieur à 18 % ;
- l'angle d'hélice noté $\alpha$ (alpha) de chaque retors est supérieur à 20°.

De préférence, le nylon ou polyamide aliphatique (pour rappel, les deux termes étant synonymes) est choisi parmi les polyamides 4-6, 6, 6-6, 11 ou 12; on utilise plus préférentiellement un nylon 6 ou 6-6, plus particulièrement un nylon 6-6.

Le retors ou câblé en nylon spécifique utilisé pour renforcer les nappes de carcasse du pneu pour avion de l'invention, a donc pour première caractéristique essentielle qu'il comporte plus de deux, c'est-à-dire trois ou plus de trois brins.

De préférence, N est égal à 3 ou 4. Plus préférentiellement encore, N est égal à 3.

La figure 2 schématise, en coupe transversale, une fibre textile multifilamentaire conventionnelle (15) à l'état initial c'est-à-dire dépourvue de torsion; de manière bien connue, une telle fibre ou « filé » (en anglais « *yarn* ») est formé d'une pluralité de filaments élémentaires (50), typiquement plusieurs dizaines à plusieurs centaines, de diamètre très fin, généralement inférieur à 35 $\mu$m.

On rappellera simplement ici que les retors ou câblés textiles, à au moins double torsion (T1, T2) et c'est ce qui est illustré à titre d'exemple aux figures 2 et 3, sont préparés à partir d'un tel filé, par un procédé dit de retordage (« *twisting* ») dans lequel :

- au cours d'une première étape (figure 2), chaque filé (15) constitutif du câblé final est tout d'abord individuellement prétordu sur lui-même (selon une torsion initiale T1) dans une direction donnée D1 (respectivement sens S ou Z selon une nomenclature reconnue désignant l'orientation des spires selon la barre transversale d'un S ou d'un Z), pour former un brin multifilamentaire (en anglais *« strand »* ou *« ply »*) encore appelé surtors (en anglais *« folded yarn»)* (20) dans lequel les filaments élémentaires (50) se voient imposés une déformation en hélice autour de l'axe de fibre (ou axe du brin) ;

- puis, au cours d'une seconde étape (figure 3), les N brins ou surtors, par exemple au nombre de trois (20a, 20b, 20c) sur la figure 3, sont ensuite retordus cette fois tous ensemble selon une torsion finale T2 (pouvant être égale à ou différente de T1) en direction opposée D2 (respectivement sens Z ou S), pour l'obtention du câblé ou retors (en anglais « *cord* » ou *« plied yarn»*) (30) final à N brins.

Par câblé à au moins double torsion (c'est-à-dire fabriqué à partir d'au moins deux torsions T1, T2 successives), on comprend donc immédiatement qu'au moins deux opérations consécutives de détorsion (ou torsion en sens inverse) sont donc nécessaires pour « déconstruire » le câblé et « remonter » aux filés initiaux le constituant, c'est-à-dire retrouver les fibres multifilamentaires de départ dans leur état initial dépourvues de torsion.

Le rôle du retordage est d'adapter les propriétés du matériau afin de créer la cohésion transversale du renfort, d'accroître sa tenue en fatigue et aussi d'améliorer l'adhésion avec la matrice renforcée.

Pour rappel, la figure 4 représente, toujours en coupe transversale, une autre représentation d'un câblé (40) textile, moins schématique que la précédente, rappelant le fait bien connu que la section d'un câblé textile (par exemple ici constitué de 4 brins ou surtors 20a, 20b, 20c, 20d), une fois formé et sous une tension minimale, s'approche plus dans les faits d'une structure cylindrique à section à contour essentiellement circulaire, en raison de la forte plasticité radiale, latérale des brins apportée par la nature multifilamentaire des fibres (filés) de départ.

De manière bien connue de l'homme du métier, les torsions peuvent être mesurées et exprimées de différentes manières, soit et de manière simple en nombre de tours par mètre (tr/m), soit et ce qui est plus rigoureux lorsqu'on souhaite comparer des matériaux de nature (masse volumique) et/ou de titre différents, en angle d'hélice ($\alpha$) des filaments ou, ce qui est équivalent, sous forme d'un facteur de torsion K.

L'angle d'hélice $\alpha$ (par rapport à l'axe du retors) peut être mesuré directement par observation visuelle sur le retors, ou bien sa tangente (Tan) calculée de manière connue par l'équation ci-dessous dans laquelle T représente la torsion (en tr/m) des filaments élémentaires constitutifs du retors, et Re (en m) le rayon d'enroulement des brins ou surtors dans le retors final :

$$\text{Tan } \alpha = 2 \, \pi \, T \, Re$$

Le rayon d'enroulement Re se déduit quant à lui aisément du rayon du surtors noté Rs, selon la construction spécifique du retors ; Re est par exemple égal à Rs dans une construction de retors à deux brins identiques, égal à $[(2/\sqrt{3}).Rs]$ dans une construction de retors à trois brins identiques.

Quant au rayon Rs (exprimé par exemple ci-dessous en cm) du surtors (assimilé à un cylindre), il se déduit aisément par le calcul de son titre en tex (poids en gramme de 1000 mètres de surtors) et de la densité ou masse volumique $\rho$ du matériau (en g/cm$^3$ ; ici, en l'occurrence 1,14 g/cm$^3$ pour le nylon) par l'équation suivante :

$$Ti = 10^5 \, \pi \, \rho \, Rs^2$$

Le facteur de torsion K est quant à lui lié à la torsion T (T1 ou T2 selon que le facteur est calculé sur un brin ou sur le retors) selon la relation bien connue qui suit (T en tr/m, Ti en tex, $\rho$ en g/cm$^3$):

$$K = T \, [Ti / (1000.\rho)]^{1/2}$$

Conformément à l'invention, le titre Ti de chaque brin ou surtors constitutif du retors est supérieur à 180 tex. De préférence, Ti est supérieur à 200 tex, plus préférentiellement supérieur à 220 tex. Plus préférentiellement encore, Ti est supérieur à 240 tex, en particulier supérieur à 260 tex.

Selon les besoins, le titre Ti peut bien entendu être ajusté par un regroupement préalable, le plus souvent par paquets de 2, 3 voire 4, de plusieurs filés de titre élémentaire inférieur. Par exemple, il est courant de préparer un brin ou surtors de 188 tex en regroupant, préalablement à toute opération de torsion, 2 filés de titre élémentaire 94 tex ; un brin ou surtors de 280 tex peut être préparé en regroupant 2 filés de titre élémentaire 140 tex. Dans tous les cas, le titre Ti indiqué dans la présente demande est toujours celui du filé final (après regroupement éventuel) servant de brin pour l'opération de première torsion (prétorsion) dans la fabrication du retors.

Selon une autre caractéristique essentielle, la ténacité (pour rappel, force à la rupture divisée par le titre) notée $Te_1$ de chaque brin est supérieure à 75 cN/tex. De préférence, elle est supérieure à 80 cN/tex, plus préférentiellement supérieure à 85 cN/tex. En particulier, elle est supérieure à 90 cN/tex, plus particulièrement supérieure à 95 cN/tex.

Selon une autre caractéristique essentielle, l'allongement à la rupture $Ar_1$ de chaque brin est supérieur à 14 %. De préférence, $Ar_1$ est supérieur à 16%, plus préférentiellement supérieur à 18%, en particulier supérieur à 20%.

A titre d'exemples de fibres commerciales en nylon pouvant convenir, on citera par exemple les fibres « T728 » ou « T802 » de la société Kordsa, « T654 » de la société Nexis, ou encore « T7 » de la société Asahi, pouvant être disponibles selon différents titres.

Selon une autre caractéristique essentielle de l'invention, la ténacité $Te_2$ du retors est supérieure à 60 cN/tex, de préférence supérieure à 65 cN/tex, encore plus préférentiellement supérieure à 70 cN/tex. En particulier, elle est supérieure à 75 cN/tex, plus particulièrement supérieure à 80 cN/tex.

Selon une autre caractéristique essentielle, l'allongement à la rupture $Ar_2$ de chaque retors est supérieur à 18 %. $Ar_2$ est de préférence supérieur à 20%, plus préférentiellement supérieur à 22 %, en particulier supérieur à 24%.

Selon une autre caractéristique essentielle, l'angle d'hélice $\alpha$ de chaque retors est supérieur à 20° ; de préférence, $\alpha$ est supérieur à 22°, plus préférentiellement supérieur à 24°.

Préférentiellement, le facteur de torsion (noté Ks) de chaque brin ou surtors, calculé donc sur le surtors tel que présent (tordu) dans le retors, est supérieur à 90, plus préférentiellement supérieur à 100, en particulier supérieur à 110.

Toutes les propriétés mécaniques indiquées précédemment sont mesurées sur des câblés textiles encollés (c'est-à-dire prêts à l'emploi, ou bien extraits de l'article en caoutchouc qu'ils renforcent) ayant été soumis à un conditionnement préalable ; par « conditionnement préalable », on entend le stockage des câblés pendant au moins 24 heures, avant mesure, dans une atmosphère standard selon la norme européenne DIN EN 20139 (température de 20 $\pm$ 2°C ; hygrométrie de 65 $\pm$ 2 %).

Le titre des brins élémentaires ou des câblés est déterminé sur au moins trois échantillons, chacun correspondant à une longueur de 50 m, par pesée de cette longueur. Pour rappel, le titre (ou densité linéique) est le poids en grammes de 1000 m de produit, il est exprimé en tex (0, 111 tex équivaut à 1 denier).

Les propriétés mécaniques en extension (force à la rupture, ténacité et allongement à la rupture) sont mesurées de manière connue à l'aide d'une machine de traction « INSTRON » munie de pinces à embarrage du type « 4D » (pour une force rupture inférieure à 100 daN) ou « 4E » (pour une force rupture au moins égale à 100 daN), sauf indications différentes selon la norme ASTM D885 (2010). Les échantillons testés subissent une traction sur une longueur initiale de 400 mm pour les pinces 4D et 800 mm pour les pinces 4E, à une vitesse nominale de 200 mm/min, sous une prétension standard de 0,5 cN/tex. Tous les résultats donnés sont une moyenne de 10 mesures.

L'homme du métier comprendra bien entendu que les propriétés mécaniques indiquées pour les retors ($Te_2$, $Ar_2$) sont celles mesurées sur les retors dans leur état (stable) de torsion donnée (sous angle d'hélice a) tandis que les propriétés mécaniques ($Ti$, $Te_1$, $Ar_1$) indiquées pour les brins multifilamentaires sont celles mesurées sur les filés constitutifs des brins une fois les retors dans un premier temps puis dans un second temps les brins eux-mêmes détordus ; ainsi reconstitués après détorsion du retors, les filés subissent ensuite simplement, de manière bien connue, une très faible torsion préalable dite « torsion de protection » (correspondant à un angle d'hélice des filaments d'environ 6 degrés) avant positionnement et traction dans les pinces.

Les compositions de caoutchouc utilisées comme matrices dans les nappes d'armature de carcasse des pneus avion de l'invention sont des compositions conventionnelles pour calandrage de renforts textiles, typiquement à base d'au moins un caoutchouc, une charge renforçante telle que noir de carbone et/ou silice, généralement un système de vulcanisation et des additifs usuels.

Pour faire adhérer les câblés en nylon à leur matrice de caoutchouc, on pourra utiliser tout système adhésif approprié, par exemple une colle textile du type « RFL » (résorcinol-formaldéhyde-latex) ou toute colle équivalente connue pour conférer une adhésion satisfaisante entre du caoutchouc et du nylon, comme par exemple les compositions adhésives plus récentes décrites dans les demandes WO 2013/017421, WO 2013/017422, WO 2013/017423, WO 2015/007641, WO 2015/007642.

De préférence, le caoutchouc est un caoutchouc diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est plus préférentiellement du caoutchouc naturel ou un polyisoprène de synthèse du type cis-1,4. Parmi ces polyisoprènes de synthèse, sont utilisés en particulier des polyisoprènes ayant un taux (% molaire) de liaisons cis-1,4 supérieur à 90%, plus préférentiellement encore supérieur à 98%. Selon un mode de réalisation particulièrement préférentiel, chaque couche de composition de caoutchouc comporte 50 à 100 pce de caoutchouc naturel.

Chaque composition de caoutchouc peut comporter un seul ou plusieurs élastomère(s) diénique(s), également tout ou partie des additifs habituellement utilisés dans les matrices de caoutchouc destinées à la fabrication de pneus, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en œuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce.

Comme noirs de carbone conviennent tous les noirs de carbone, notamment les noirs du type HAF, ISAF, SAF conventionnellement utilisés dans les pneus (noirs dits de grade pneu). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m$^2$/g, de préférence de 30 à 400 m$^2$/g.

De préférence, chaque composition de caoutchouc présente, à l'état réticulé, un module sécant en extension noté Ms, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de ce module sécant sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Le pneu de l'invention a pour autre caractéristique préférentielle que la densité des retors textiles radiaux renforçant ladite (au moins une) nappe carcasse radiale, mesurée selon la direction axiale Y, est comprise entre 50 et 80 fils/dm de nappe (par décimètre, c'est-à-dire par 100 mm de largeur de nappe de caoutchouc), de préférence de 60 à 75 fils/dm de nappe.

L'usage d'un pneu pour avion est caractérisé on le sait par des conditions de pression, de charge et de vitesse particulièrement élevées.

Par « pneu pour avion », on entend préférentiellement dans la présente demande un pneu dont la pression nominale est supérieure à 9 bars et la flèche nominale supérieure à 30%.

Pour rappel, la pression nominale est la pression de gonflage nominale du pneu telle que définie, par exemple, par la norme de la Tire and Rim Association (ou TRA).

La flèche nominale est la déformation radiale d'un pneu, ou variation de hauteur radiale, lorsque celui-ci passe d'un état gonflé non chargé à un état gonflé chargé en statique, dans les conditions de pression et de charge nominales telles que définies, par exemple, par la norme TRA. Elle est exprimée sous la forme d'une flèche relative, définie par le rapport de cette variation de la hauteur radiale du pneu sur la moitié de la différence entre le diamètre extérieur du pneu et le diamètre maximum de la jante mesuré sur le rebord de jante. Le diamètre extérieur du pneu est mesuré en statique dans un état non chargé gonflé à la pression nominale. La norme TRA définit en particulier l'écrasement d'un pneu d'avion par son rayon écrasé, c'est-à-dire par la distance entre l'axe de la roue du pneu et le plan du sol avec lequel le pneu est en contact dans les conditions de pression et de charge nominales.

Dans le pneu de l'invention, l'armature (7) de carcasse radiale comporte de préférence une pluralité de nappes carcasse superposées radialement, le nombre de nappes carcasse superposées étant plus préférentiellement compris dans un domaine de 3 à 10.

La spécificité du câblé ou retors en nylon utilisé dans l'armature de carcasse du pneu avion de l'invention, comparativement aux retors utilisés jusqu'ici dans les armatures de carcasse des pneus avion de l'art antérieur, est qu'il combine les caractéristiques essentielles précédemment énoncées, à savoir :

- il est constitué d'au moins trois brins ;
- le titre (élémentaire) de chaque brin est très élevé, supérieur à 180 tex ; sa ténacité est supérieure à 75 cN/tex ; son allongement à la rupture est supérieur à 14 % ;
- la ténacité de chaque retors est supérieure à 60 cN/tex, son allongement à la rupture est supérieur à 18 % ; son angle d'hélice $\alpha$ est supérieur à 20°.

Il doit être noté qu'une construction à trois brins (voire plus), pour des titres élémentaires de brin aussi élevés (supérieurs à 180 tex), allait en fait à l'encontre des connaissances et orientations de l'homme du métier.

Ce dernier en effet, sachant que de très hautes force à la rupture et résistance à la fatigue des retors sont nécessaires pour l'armature de carcasse d'un pneu avion, que toute amélioration de cette résistance à la fatigue passe au premier ordre par une augmentation de la torsion (angle d'hélice) du retors s'accompagnant inévitablement d'une dégradation de la force à la rupture, était enclin à augmenter les titres élémentaires des brins sans en augmenter le nombre. En outre, une augmentation du nombre de brins constitutifs du retors, sans compter le fait qu'elle est plus coûteuse, impliquant une complexité plus grande de construction de ce dernier, s'accompagne du risque attendu d'apparition de défauts potentiellement nuisibles à l'endurance globale du renfort.

D'ailleurs, limiter le nombre de brins à deux (c'est-à-dire au minimum) apparaît bien être précisément le choix qui a été fait dans les documents de l'art antérieur cités en introduction du présent mémoire, décrivant tous, pour une application de renforcement de l'armature de carcasse radiale d'un pneu avion, des constructions de câbles à seulement 2 brins (N égal à 2) chaque fois que le titre élémentaire des brins était particulièrement élevé, supérieur à 180 tex.

Or, comme cela va être détaillé dans les essais qui suivent, des tests conduits par les Demanderesses ont démontré un résultat inattendu allant à l'encontre de ce préjugé.

Pour les besoins de ces essais, six câblés différents, tous en nylon 6-6, ont été fabriqués à partir d'une même fibre de départ ($Te_1$ égale à environ 90 cN/tex et $Ar_1$ égal à environ 20%) présentant deux titres différents, l'un de 188 tex et l'autre de 280 tex.

Pour pouvoir conduire les tests comparatifs à titre global (environ 560 tex) identique, les filés de 280 tex ont donc été assemblés par deux brins (N égal à 2), ceux de 188 tex ont été assemblés par trois brins (N égal à 3). Pour chacune de ces deux variantes de titre initial Ti sur brin, trois câblés différents ont été fabriqués en faisant varier l'angle d'hélice (calculé selon l'équation donnée supra) selon trois valeurs croissantes, de 23,5° à 28° (torsion T2 variant d'environ 245 tr/m à 320 tr/m selon les cas).

Les six câblés en nylon, notés C1 à C6 dans le tableau qui suit, se caractérisaient tous par une construction à double torsion ; ils ont été fabriqués de manière conventionnelle par assemblage de 2 ou 3 brins (N égal à 2 ou 3) selon la torsion finale T2 et la direction D2 (sens S). Chacun de ces brins avait été préalablement fabriqué par une opération de torsion initiale (T1 égale à T2) du filé sur lui-même selon la direction opposée D1 (sens Z).

Puis la résistance à la fatigue de ces câblés a été analysée en les soumettant à des tests de laboratoire bien connus de l'homme du métier, test dit de « courroie » parfois nommé « *Shoe Shine test* », et test dit *"Disc Fatigue Test"* (voir par exemple EP 848 767, US 2 595 069, US 4 902 774, norme ASTM D885-591 révisée 67T), tests dans lesquels les câblés textiles, préalablement encollés, sont incorporés dans un article en caoutchouc que l'on vulcanise.

Le principe du test « courroie », tout d'abord, est le suivant : la courroie comprend deux couches du câblé à tester, dans un mélange (composition) connu de caoutchouc du type de ceux couramment utilisés pour le renforcement des pneus. L'axe de chaque câblé est orienté selon la direction longitudinale de la courroie et les câblés sont séparés des faces de cette dernière par une épaisseur de gomme d'environ 1 mm.

On fait ensuite subir à cette courroie les sollicitations suivantes : on entraîne de façon cyclique, à l'aide d'un système bielle-manivelle, la courroie autour d'un galet de diamètre donné (ici 15 mm), de telle sorte que chaque portion élémentaire de la courroie soit soumise à une tension donnée (ici, environ 15 daN) et subisse des cycles de variation de courbure qui la font passer d'un rayon de courbure infini à un rayon de courbure donné et ceci pendant 190 000 cycles, à une fréquence de 7 Hz. Cette variation de courbure de la courroie fait subir au câblé de la couche intérieure, celle la plus proche du galet, un taux de compression géométrique donné (ici, environ 13%) selon le diamètre du galet choisi. A la fin de ces sollicitations, on extrait par décorticage les câblés de la couche intérieure et on mesure la déchéance (notée ΔFR) de force à la rupture des câblés une fois fatigués.

Le « *Disc Fatigue Test* » consiste quant à lui essentiellement à incorporer les câblés à tester dans des blocs de caoutchouc, puis, après cuisson, à fatiguer les éprouvettes de gomme ainsi constituées en compression, entre deux disques tournants inclinés l'un par rapport à l'autre (ici, 3,5° soit environ 28% de taux de compression maximal entre les deux disques) un très grand nombre de cycles (dans les exemples qui suivent, 600 000 cycles à 33 cycles/s). Après fatigue, les câblés sont extraits des éprouvettes ; on mesure leur force rupture résiduelle et on en déduit la déchéance (ΔFR) de force à la rupture.

Les résultats obtenus pour les deux types de test sont détaillés dans le tableau ci-dessous ; est également indiquée la force à la rupture (FR) initiale du retors, c'est-à-dire avant fatigue (exprimée en unité absolue et en valeur relative avec la base 100 retenue pour l'angle d'hélice le plus faible, de 23,5°).

**Tableau**

| Réf.Câblé | Ti filé (tex) | N | Angle hélice ($\alpha$) | Force rupture FR (daN) | | ΔFR "Disc Fatigue Test" | ΔFR "Shoe Shine Test" |
|---|---|---|---|---|---|---|---|
| C1 | 280 | 2 | 23.5° | 48.0 | 100 | - 29 % | - 90 % |
| C2 | 280 | 2 | 25.5° | 46.5 | 98 | - 22 % | -40% |

(suite)

| Réf.Câblé | Ti filé (tex) | N | Angle hélice ($\alpha$) | Force rupture FR (daN) | | $\Delta$FR "Disc Fatigue Test" | $\Delta$FR "Shoe Shine Test" |
|---|---|---|---|---|---|---|---|
| C3 | 280 | 2 | 28.0° | 45.5 | 96 | -15% | -17% |
| C4 | 188 | 3 | 23.5° | 48.5 | 100 | -12% | - 32% |
| C5 | 188 | 3 | 25.5° | 45.0 | 93 | - 7% | - 11 % |
| C6 | 188 | 3 | 28.0° | 40.0 | 82 | - 3 % | - 2 % |

A la lecture détaillée de ce tableau, on note tout d'abord que l'augmentation de la torsion (angle d'hélice jusqu'à 28°) se traduit par une diminution de la force à la rupture nettement plus rapide dans le cas de la construction plus complexe à trois brins : -18% pour le retors à trois brins (N = 3), à comparer à -4% seulement pour le retors à deux brins (N = 2).

Un tel résultat était attendu par l'homme du métier qui, précisément pour cette raison de dégradation plus rapide de la force à la rupture, n'était pas du tout enclin à s'éloigner de la construction à deux brins pour des titres élémentaires aussi élevés (supérieurs à 180 tex).

Or, de manière tout à fait inattendue, on constate que le passage de la construction à deux brins (N = 2) vers la construction à trois brins (N = 3), quel que soit le type de test de fatigue, s'accompagne d'une amélioration très significative de l'endurance ($\Delta$FR réduite), et ceci tout particulièrement en ce qui concerne l'endurance en flexion-compression (*Shoe Shine Test)* essentielle comme nous l'avons souligné pour le renforcement d'une armature de carcasse de pneu avion : là où les câblés à deux brins (respectivement C3, C2 et C1) perdent après fatigue respectivement 17%, 40% et 90% de leur force à la rupture initiale, selon la torsion considérée, les câblés à trois brins (respectivement C6, C5 et C4) ne perdent que 2%, 11% et 32% de leur force à la rupture initiale pour les mêmes niveaux de torsion.

En conclusion, il faut donc en déduire que, pour un même titre global de retors et une même torsion (même angle d'hélice), la construction à trois brins de titre élevé, malgré la perte de force à la rupture plus conséquente, se révèle au bout du compte nettement plus avantageuse dans une armature de carcasse de pneu pour avion, là où une très bonne fatigue en flexion-compression est visée.

Grâce à l'invention, il devient donc possible d'améliorer encore l'endurance des armatures de carcasse radiale pour avion, ainsi d'augmenter la durée de vie des pneus ou alternativement, à durée de vie donnée, de diminuer le poids de ces armatures et pneus en réduisant le nombre total de nappes présentes dans ces armatures de carcasse.

## Revendications

1.    Pneu radial pour avion (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) à au moins une tringle (6) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3), ladite armature (7) de carcasse dite radiale comportant au moins une nappe dite nappe de carcasse sous la forme d'une matrice de caoutchouc renforcée par des éléments de renforcement orientés radialement, dits renforts textiles radiaux, ces derniers étant en tout ou partie constitués par des retors textiles (30) comportant N brins multifilamentaires (20a, 20b, 20c) retordus ensemble en hélice, le titre noté Ti de chaque brin étant supérieur à 180 tex, **caractérisé en ce que** :

     - chaque retors textile est en nylon ;
     - N est supérieur à 2 ;
     - la ténacité notée $Te_1$ de chaque brin est supérieure à 75 cN/tex ;
     - l'allongement à la rupture noté $Ar_1$ de chaque brin est supérieur à 14 % ;
     - la ténacité notée $Te_2$ de chaque retors est supérieure à 60 cN/tex ;
     - l'allongement à la rupture noté $Ar_2$ de chaque retors est supérieur à 18 % ;
     - l'angle d'hélice noté $\alpha$ de chaque retors est supérieur à 20°.

2.    Pneu selon la revendication 1, dans lequel N est égal à 3 ou 4, de préférence égal à 3.

3.    Pneu selon l'une quelconque des revendications 1 ou 2, dans lequel Ti est supérieur à 200 tex, de préférence supérieur à 220 tex.

4. Pneu selon la revendication 3, dans lequel Ti est supérieur à 240 tex, de préférence supérieur à 260 tex.

5. Pneu selon l'une quelconque des revendications 1 à 4, dans lequel $Te_1$ est supérieure à 80 cN/tex, de préférence supérieure à 85 cN/tex.

6. Pneu selon la revendication 5, dans lequel $Te_1$ est supérieure à 90 cN/tex, de préférence supérieure à 95 cN/tex.

7. Pneu selon l'une quelconque des revendications 1 à 6, dans lequel $Ar_1$ est supérieur à 16 %, de préférence supérieur à 18 %.

8. Pneu selon l'une quelconque des revendications 1 à 7, dans lequel le nylon est un nylon 6 ou 6-6, de préférence un nylon 6-6.

9. Pneu selon l'une quelconque des revendications 1 à 8, dans lequel $Te_2$ est supérieure à 65 cN/tex, de préférence supérieure à 70 cN/tex.

10. Pneu selon la revendication 9, dans lequel $Te_2$ est supérieure à 75 cN/tex, de préférence supérieure à 80 cN/tex.

11. Pneu selon l'une quelconque des revendications 1 à 10, dans lequel $Ar_2$ est supérieur à 20 %, de préférence supérieur à 22 %.

12. Pneu selon l'une quelconque des revendications 1 à 11, dans lequel l'angle d'hélice $\alpha$ de chaque retors est supérieur à 22°, de préférence supérieur à 24°.

13. Pneu selon l'une quelconque des revendications précédentes, dans lequel la densité des retors textiles radiaux renforçant la nappe carcasse radiale, selon la direction axiale Y, est comprise entre 50 et 80 fils/dm de nappe, de préférence de 60 à 75 fils/dm de nappe.

14. Pneu selon l'une quelconque des revendications précédentes, l'armature (7) de carcasse radiale comportant une pluralité de nappes carcasse superposées radialement, le nombre de nappes carcasse superposées étant de préférence compris dans un domaine de 3 à 10.

15. Utilisation, pour le renforcement d'une armature de carcasse d'un pneu radial pour avion, d'un retors textile (30) comportant N brins multifilamentaires (20a, 20b, 20c) retordus ensemble en hélice, le titre noté Ti de chaque brin étant supérieur à 180 tex, **caractérisée en ce que** :

   - le retors textile est en nylon ;
   - N est supérieur à 2 ;
   - la ténacité notée $Te_1$ de chaque brin est supérieure à 75 cN/tex ;
   - l'allongement à la rupture noté $Ar_1$ de chaque brin est supérieur à 14 % ;
   - la ténacité notée $Te_2$ de chaque retors est supérieure à 60 cN/tex ;
   - l'allongement à la rupture noté $Ar_2$ de chaque retors est supérieur à 18 % ;
   - l'angle d'hélice noté $\alpha$ de chaque retors est supérieur à 20°.

**Patentansprüche**

1. Radialreifen für ein Flugzeug (1), der drei Hauptrichtungen definiert, Umfangsrichtung (X), axiale Richtung (Y) und radiale Richtung (Z), der einen Scheitel (2) überlagert von einem Laufstreifen (3), zwei Flanken (4), zwei Wülste (5), wobei jede Flanke (4) jeden Wulst (5) mit dem Scheitel (2) verbindet, eine Karkassenbewehrung (7) verankert in jedem der Wülste (5) an mindestens einem Wulstkern (6) und sich in den Flanken (4) bis zum Scheitel (2) erstreckend, eine Scheitelbewehrung oder Gürtel (10) aufweist, die sich im Scheitel (2) gemäß der Umfangsrichtung (X) erstreckt und sich radial zwischen der Karkassenbewehrung (7) und dem Laufstreifen (3) befindet, wobei die so genannte radiale Karkassenbewehrung (7) mindestens eine Karkassenlage genannte Lage in Form einer Kautschukmatrix aufweist, die durch radial ausgerichtete Verstärkungselemente, radiale Textilverstärkungen genannt, verstärkt wird, wobei letztere ganz oder teilweise aus Textilzwirnen (30) bestehen, die N Multifilament-Teilstücke (20a, 20b, 20c) aufweisen, die schraubenförmig miteinander verzwirnt sind, wobei der mit Ti bezeichnete Titer jedes Teilstücks höher als 180 Tex ist, **dadurch gekennzeichnet, dass**:

- jeder Textilzwirn aus Nylon ist;
- N größer als 2 ist;
- die mit $Te_1$ bezeichnete Zähigkeit jedes Teilstücks höher als 75 cN/tex ist;
- die mit $Ar_1$ bezeichnete Bruchdehnung jedes Teilstücks höher als 14% ist;
- die mit $Te_2$ bezeichnete Zähigkeit jedes Zwirns höher als 60 cN/tex ist;
- die mit $Ar_2$ bezeichnete Bruchdehnung jedes Zwirns höher als 18% ist;
- der mit $\alpha$ bezeichnete Schrägungswinkel jedes Zwirns größer als 20° ist.

2. Reifen nach Anspruch 1, wobei N gleich 3 oder 4, vorzugsweise gleich 3 ist.

3. Reifen nach einem der Ansprüche 1 oder 2, wobei Ti höher als 200 tex, vorzugsweise höher als 220 tex ist.

4. Reifen nach Anspruch 3, wobei Ti höher als 240 tex, vorzugsweise höher als 260 tex ist.

5. Reifen nach einem der Ansprüche 1 bis 4, wobei $Te_1$ höher als 80 cN/tex, vorzugsweise höher als 85 cN/tex ist.

6. Reifen nach Anspruch 5, wobei $Te_1$ höher als 90 cN/tex, vorzugsweise höher als 95 cN/tex ist.

7. Reifen nach einem der Ansprüche 1 bis 6, wobei $Ar_1$ höher als 16%, vorzugsweise höher als 18% ist.

8. Reifen nach einem der Ansprüche 1 bis 7, wobei das Nylon ein Nylon 6 oder 6-6, vorzugsweise ein Nylon 6-6 ist.

9. Reifen nach einem der Ansprüche 1 bis 8, wobei $Te_2$ höher als 65 cN/tex, vorzugsweise höher als 70 cN/tex ist.

10. Reifen nach Anspruch 9, wobei $Te_2$ höher als 75 cN/tex, vorzugsweise höher als 80 cN/tex ist.

11. Reifen nach einem der Ansprüche 1 bis 10, wobei $Ar_2$ höher als 20%, vorzugsweise höher als 22% ist.

12. Reifen nach einem der Ansprüche 1 bis 11, wobei der Schrägungswinkel $\alpha$ jedes Zwirns größer als 22°, vorzugsweise größer als 24° ist.

13. Reifen nach einem der vorhergehenden Ansprüche, wobei die Dichte der die radiale Karkassenlage verstärkenden radialen Textilzwirne gemäß der axialen Richtung Y zwischen 50 und 80 Fäden/dm pro Lage, vorzugsweise 60 bis 75 Fäden/dm pro Lage beträgt.

14. Reifen nach einem der vorhergehenden Ansprüche, wobei die radiale Karkassenbewehrung (7) eine Vielzahl radial übereinander liegender Karkassenlagen aufweist, wobei die Anzahl von übereinanderliegenden Karkassenlagen vorzugsweise in einem Bereich von 3 bis 10 liegt.

15. Verwendung, zur Verstärkung einer Karkassenbewehrung eines Radialreifens für ein Flugzeug, eines Textilzwirns (30), der N Multifilament-Teilstücke (20a, 20b, 20c) aufweist, die schraubenförmig miteinander verzwirnt sind, wobei der mit Ti bezeichnete Titer jedes Teilstücks höher als 180 tex ist, **dadurch gekennzeichnet, dass**:

- der Textilzwirn aus Nylon ist;
- N höher als 2 ist;
- die mit $Te_1$ bezeichnete Zähigkeit jedes Teilstücks höher als 75 cN/tex ist;
- die mit $Ar_1$ bezeichnete Bruchdehnung jedes Teilstücks höher als 14% ist;
- die mit $Te_2$ bezeichnete Zähigkeit jedes Zwirns größer als 60 cN/tex ist;
- die mit $Ar_2$ bezeichnete Bruchdehnung jedes Zwirns höher als 18% ist;
- der mit $\alpha$ bezeichnete Schrägungswinkel jedes Zwirns größer als 20° ist.

## Claims

1. Radial aircraft tyre (1), defining three main directions, circumferential (X), axial (Y) and radial (Z), comprising a crown (2) surmounted by a tread (3), two sidewalls (4), two beads (5), each sidewall (4) connecting each bead (5) to the crown (2), a carcass reinforcement (7) that is anchored in each of the beads (5) at at least one bead wire (6) and extends in the sidewalls (4) as far as the crown (2), a crown reinforcement or belt (10) that extends in the crown (2) in the circumferential direction (X) and is situated radially between the carcass reinforcement (7) and the tread (3), said carcass reinforcement (7) referred to as radial carcass reinforcement having at least one ply referred to as carcass ply in the form of a rubber matrix reinforced with radially oriented reinforcing elements, referred to as radial textile reinforcers, the latter being constituted entirely or partially by textile plied yarns (30) comprising N multifilament strands (20a, 20b, 20c) twisted together to form a helix, the count denoted Ti of each strand is greater than 180 tex, **characterized in that**:

- each textile plied yarn is in Nylon;
- N is greater than 2;
- the tenacity denoted $Te_1$ of each strand is greater than 75 cN/tex;
- the elongation at break denoted $Ar_1$ of each strand is greater than 14%;
- the tenacity denoted $Te_2$ of each plied yarn is greater than 60 cN/tex;
- the elongation at break denoted $Ar_2$ of each plied yarn is greater than 18%;
- the helix angle denoted $\alpha$ of each plied yarn is greater than 20°.

2. Tyre according to Claim 1, wherein N is equal to 3 or 4, preferably equal to 3.

3. Tyre according to either one of Claims 1 and 2, wherein Ti is greater than 200 tex, preferably greater than 220 tex.

4. Tyre according to Claim 3, wherein Ti is greater than 240 tex, preferably greater than 260 tex.

5. Tyre according to any one of Claims 1 to 4, wherein $Te_1$ is greater than 80 cN/tex, preferably greater than 85 cN/tex.

6. Tyre according to Claim 5, wherein $Te_1$ is greater than 90 cN/tex, preferably greater than 95 cN/tex.

7. Tyre according to any one of Claims 1 to 6, wherein $Ar_1$ is greater than 16%, preferably greater than 18%.

8. Tyre according to any one of Claims 1 to 7, wherein the nylon is a nylon 6 or 6-6, preferably a nylon 6-6.

9. Tyre according to any one of Claims 1 to 8, wherein $Te_2$ is greater than 65 cN/tex, preferably greater than 70 cN/tex.

10. Tyre according to Claim 9, wherein $Te_2$ is greater than 75 cN/tex, preferably greater than 80 cN/tex.

11. Tyre according to any one of Claims 1 to 10, wherein $Ar_2$ is greater than 20%, preferably greater than 22%.

12. Tyre according to any one of Claims 1 to 11, wherein the helix angle $\alpha$ of each plied yarn is greater than 22°, preferably greater than 24°.

13. Tyre according to any one of the preceding Claims, wherein the density of radial textile plied yarns reinforcing the radial carcass ply, in the axial direction Y, is between 50 and 80 threads/dm of ply, preferably 60 to 75 threads/dm of ply.

14. Tyre according to any one of the preceding Claims, wherein the radial carcass reinforcement (7) has a plurality of radially superposed carcass plies, the number of superposed carcass plies is preferably in a range from 3 to 10.

15. Use, for reinforcing a carcass reinforcement of a radial aircraft tyre, of a textile plied yarn (30) comprising N multifilament strands (20a, 20b, 20c) twisted together to form a helix, the count denoted Ti of each strand is greater than 180 tex, wherein:

- the textile plied yarn is in Nylon
- N is greater than 2;
- the tenacity denoted $Te_1$ of each strand is greater than 75 cN/tex;
- the elongation at break denoted $Ar_1$ of each strand is greater than 14%;
- the tenacity denoted $Te_2$ of each plied yarn is greater than 60 cN/tex;
- the elongation at break denoted $Ar_2$ of each plied yarn is greater than 18%;
- the helix angle denoted $\alpha$ of each plied yarn is greater than 20°.

# Fig. 1

## Fig. 2

## Fig. 3

# Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0756950 A
- EP 174147 A
- EP 295348 A
- EP 364291 A
- EP 1808313 A
- FR 2624063
- FR 2628035
- FR 2632252
- US 4887655 A
- US 8752602 B
- EP 1800901 A
- WO 2013017421 A
- WO 2013017422 A
- WO 2013017423 A
- WO 2015007641 A
- WO 2015007642 A
- EP 848767 A
- US 2595069 A
- US 4902774 A